# EUROPEAN PATENT APPLICATION

(11) **EP 3 065 384 A1**
(43) Date of publication of application: **07.09.2016**
(21) Application number: 15194942.7
(22) Date of filing: 17.11.2015
(51) Int. Cl.: H04M 1/60

(54) **BLUETOOTH HEADSET SYSTEM HAVING AUTOMATIC INDUCTION AND CONTROL FUNCTIONS AND CONTROL METHOD THEREOF**

(30) Priority: 05.03.2015 CN 201510097358
(71) Applicant: NTL Manufacturing (Shenzhen) Limited, Shenzhen Guangdong (CN)
(72) Inventor: Nip, Chun, Hong Kong (HK)
(74) Representative: Izquierdo Blanco, Maria Alicia

(57) **Abstract**

A bluetooth headset system having automatic induction and control functions and a control method thereof are disclosed in present invention. The bluetooth headset system includes a bluetooth module, a power amplifier module, a body induction module, a control module, a battery module and an automatic playing module. According to the bluetooth headset system in the invention, the body induction module directly senses whether or not the Bluetooth headset system is worn on the user's head. In this way, problems, such as misjudgment and lower accuracy produced by the mechanical switch, can be avoided, and the aim of intelligentized power-saving can be realized. Thus, the power is saved and the environment is protected.

## Description

### TECHNICAL FIELD

The present invention relates to the technical field of headsets, and more particularly, to a bluetooth headset system having automatic induction and control functions and a control method thereof.

### BACKGROUND

At present, the on-off states of power supplies of most bluetooth headsets are controlled by manually operating a mechanical switch; in this way, when the bluetooth headset is worn or removed by a user, the user needs to manually turn the mechanical switch on or off. This control mode for controlling the on-off states of the bluetooth headset is inconvenience for the user. For example, when the bluetooth headset is removed by the user and forget to turn the switch off, the bluetooth headset is in on state, thus wasting power. For example, when the bluetooth headset is worn, the user should manually turn the switch on, thus inconvenience for the user. In particularly, while the user is driving or in other unsuited states, the switch is manually turned on , which would cause risks for the user.

In prior art, a headset which can be automatic switching is disclosed. However, most of the headsets also adopts mechanical switch. With such configuration, the headset turned on or off is controlled by the actions of headset wearing. This control mode does not need to manually control, but the reliability of the control mode is poor. and since the opening and closing actions is misadjusted, the possibility of the headset in on state is very high at present, which will cause a waste of the power y and other uncertain events.

In view of this, a new bluetooth headset system which can accurately and automatically sensing whether or not the Bluetooth headset is worn by the user is required, so as to control the on-off of the power supply of the bluetooth headset and realize the aim of intelligentized electricity-saving.

### SUMMARY

The object of the present invention is to provide a bluetooth headset system having automatic induction and control functions, which can avoid the Bluetooth headset system being on in any case, which would cause waste of the power.

A further object of the present invention is to provide a control method of the bluetooth headset system having automatic induction and control functions.

In one aspect of the invention, a bluetooth headset system having automatic induction and control functions comprises: a bluetooth module, a power amplifier module, a body induction module, a control module, a battery module and an automatic playing module; the bluetooth module configured for wireless transmission; the power amplifier module connected to the bluetooth module, and configured for playing a sound signal received by the bluetooth module; the body induction module connected to the control module, and configured for automatically sensing whether or not the bluetooth headset system is worn by a user, generating a first detection signal when the bluetooth headset system is worn by the user and sending the first detection signal to the control module; after that, generating a second detection signal when the bluetooth headset system isn't worn by the user and sending the second detection signal to the control module; after that, generating a third detection signal when the bluetooth headset system is worn by the user again and sending the third detection signal to the control module; the control module connected to the bluetooth module and the power amplifier module, and configured for generating a first control signal that controls the battery module to provide a power source for the bluetooth module and the power amplifier module according to the first detection signal and sending the first control signal to the power module; after that, if the control module received the second detection signal, determining whether or not the bluetooth module is in a transmission state, if the bluetooth module being in a transmission state, generating a suspension signal for suspending the transmission of the bluetooth module and sending the suspension signal to the automatic playing module; after that, determining whether or not the third detection signal is received during a preset time interval , if the third detection signal is received during the preset time interval, then generating a transmission signal for re-transmission of the bluetooth module, and sending the transmission signal to the automatic playing module; and if the third detection signal isn't received during the preset time interval, then generating a second control signal that controls the battery module to stop providing a power source to the bluetooth module and the power amplifier module, and sending the second control signal to the battery module; the automatic playing module connected to the bluetooth module, and configured for controlling the bluetooth module to suspend the wireless transmission according to the suspension signal, so that the power amplifier module suspends to play; or control the bluetooth module to wireless transmit again according to the transmission signal, so that the power amplifier module plays again; and the battery module connected to the control module, and configured for providing a power source for the bluetooth module and the power amplifier module respectively according to the first control signal so as to operating the bluetooth module and the power amplifier module, or stopping providing a power source to the bluetooth module and the power amplifier module according to the second control signal so as to turn the bluetooth module and the power amplifier module off.

Preferably, the body induction module is a capacitive sensor.

Preferably, the body induction module is a photoelectrical sensor.

Preferably, the control module is a Digital Signal Processor, a Advanced RISC Machines or a Phase Locked Loop.

Preferably, the power amplifier module is an amplified filter circuit.

Preferably, the bluetooth headset system is an ear-hook bluetooth headset or in-ear mono bluetooth headset.

In another aspect of the invention, a control method of the bluetooth headset system having automatic induction and control functions comprises the steps of: sensing, by the body induction module, whether or not the bluetooth headset system is worn by a user; generating a first detection signal when the bluetooth headset system is worn by the user and sending the first detection signal to the control module; after that, generating a second detection signal when the bluetooth headset system isn't worn by the user and sending the second detection signal to the control module; after that, generating a third detection signal when the bluetooth headset system is worn by the user again, and sending the third detection signal to the control module; generating, by the control module, a first control signal that controls the battery module to provide a power source for the bluetooth module and the power amplifier module according to the first detection signal from the body induction module, and sending the first control signal to the battery module; after that, if receiving the second detection signal, determining whether or not the bluetooth module is in a transmission state, if the bluetooth module being in a transmission state, generating a suspension signal for suspending the transmission of the bluetooth module and sending the suspension signal to the automatic playing module; after that, determining whether or not the third detection signal is received during a preset time interval, if the third detection signal is received during the preset time interval, generating a transmission signal for re-transmission of the bluetooth module and sending the transmission signal to the automatic playing module; if the third detection signal isn't received during the preset time interval, generating a second control signal that controls the battery module to stop providing the power source to the bluetooth module and the power amplifier module, and sending the second control signal to the battery module; controlling, by the automatic playing module, the bluetooth module to suspend wireless transmission according to the suspension signal from the control module, so that the power amplifier module suspends to play; or controlling the bluetooth module to wireless transmit again according to the transmission signal from the control module, so that the power amplifier module plays again; and providing, by the battery module, a power source for the bluetooth module and the power amplifier module respectively according to the first control signal from the control module so as to operating the bluetooth module and the power amplifier module; or stopping providing a power source to the bluetooth module and the power amplifier module according to the second control signal from the control module so as to turn the bluetooth module and the power amplifier module off.

Preferably, the body induction module is a capacitive sensor, the capacitance of the capacitive transducer varied while the bluetooth headset systme is worn or removed, and thus the detection signals are generated according to the varied capacitance.

Preferably, the body induction module is a photoelectrical sensor, the ray propagation of the photoelectrical transducer changed while bluetooth headset system is worn or removed, and thus the detection signals are generated according to the change of ray propagation.

This solution has various advantages.

The body induction module of the bluetooth headset system directly sensing whether or not the bluetooth headset system is worn on the user's head. In this way, problems, such as misjudgment and lower accuracy produced by the mechanical switch, can be avoided, and the aim of intelligentized power-saving is realized. Thus, the power is saved and the environment is protected.

### BRIEF DESCRIPTION OF THE DRAWINGS

Fig. 1 is an illustrated block diagram of a bluetooth headset system having automatic induction and control functions according to one embodiment of the present invention.
Fig. 2 is a flow chart of a control method of the bluetooth headset having automatic induction and control functions according to one embodiment of the present invention.
Fig. 3 is a flow chart of a control method of the bluetooth headset having automatic induction and control functions according to another embodiment of the present invention.
Fig. 4 is a flow chart of a control method of the bluetooth headset having automatic induction and control functions according to yet another embodiment of the present invention.

### DETAILED DESCRIPTION

The technical problem to be solved, solution and advantages of the present invention will become more apparent from the following detailed description of the invention, with reference to the accompanying drawings and embodiments. It should be noted that the specific embodiments described herein are only for explanation of the present invention, but are not intended to limit the present invention.

### First embodiment

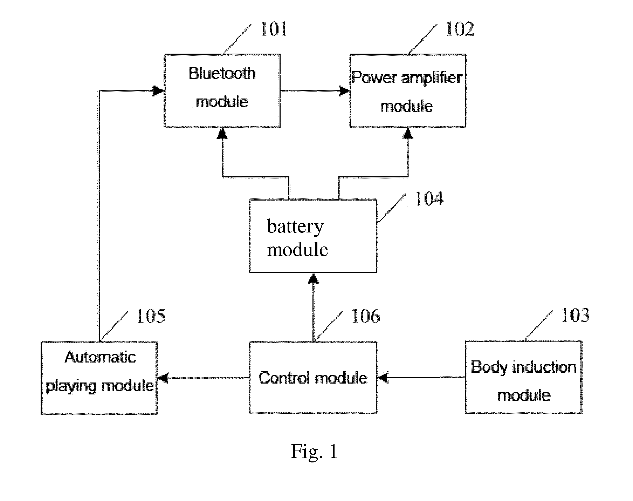

As shown in Fig. 1, a bluetooth headset system having automatic induction and control functions includes a bluetooth module 101, a power amplifier module 102, a body induction module 103, a control module 106, a battery module 104 and an automatic playing module 105. The bluetooth module 101 is configured for wireless transmission. The power amplifier module 102 is connected to the bluetooth module 101, and is configured to play a sound signal received by the bluetooth module 101. The body induction module 103 is connected to the control module 104, and is configured to automatically sensing whether or not the bluetooth headset system is worn by a user, generate a first detection signal when the bluetooth headset system is worn by the user and send the first detection signal to the control module 104; after that, generate a second detection signal when the bluetooth headset system isn't worn by the user and send the second detection signal to the control module 104; after that, generate a third detection signal when the bluetooth headset system is worn by the user again, and send the third detection signal to the control module 104. The control module 106 is connected to the bluetooth module 101 and the power amplifier module 102, and is configured to generate a first control signal that controls the battery module 104 to provide a power source for the bluetooth module 101 and the power amplifier module 102 according to the first detection signal, and send the first control signal to the battery module 104; after that, if the control module 106 receives the second detection signal, determine whether or not the bluetooth module is in a transmission state, if the bluetooth module is in a transmission state, generate a suspension signal for suspending the transmission of the bluetooth module 101 and send the suspension signal to the automatic playing module 105; after that, determine whether or not the third detection signal is received during a preset time interval, if the third detection signal is received during the preset time interval, then generate a transmission signal for re-transmission of the bluetooth module 101, and send the transmission signal to the automatic playing module 105; and if the third detection signal isn't received during the preset time interval, then generate a second control signal that controls the battery module 104 to stop providing a power source to the bluetooth module 101 and the power amplifier module 102, and send the second control signal to the battery module 104. The automatic playing module 105 is connected to the bluetooth module 101, and is configured to control the bluetooth module 101 to suspend wireless transmission according to the suspension signal, so that the power amplifier module 102 suspends to play; or control the bluetooth module 101 to wireless transmit again according to the transmission signal, so that the power amplifier module 102 plays again. The battery module 104 is connected to the control module 106, and is configured to provide a power source for the bluetooth module 101 and the power amplifier module 102 respectively according to the first control signal so as to operating the bluetooth module 101 and the power amplifier module 102; or stop providing a power source to the bluetooth module 101 and the power amplifier module 102 according to the second control signal so as to turn them off.

Preferably, the body induction module 103 is a capacitive sensor.

Preferably, the body induction module 103 is a photoelectrical sensor.Preferably, the control module 106 is a Digital Signal Processor (DSP), a Advanced RISC Machines (ARM) or a Phase Locked Loop (PLL).

Preferably, the power amplifier module 102 is an amplified filter circuit.

Preferably, the bluetooth headset system is an ear-hook bluetooth headset or in-ear mono bluetooth headset.

In this embodiment, the body induction module of the bluetooth headset system directly sensing whether or not the Bluetooth headset system is worn on the user's head. In this way, problems, such as misjudgment and lower accuracy produced by the mechanical switch, can be avoided, and the aim of intelligentized power-saving is realized. Thus, the power is saved and the environment is protected.

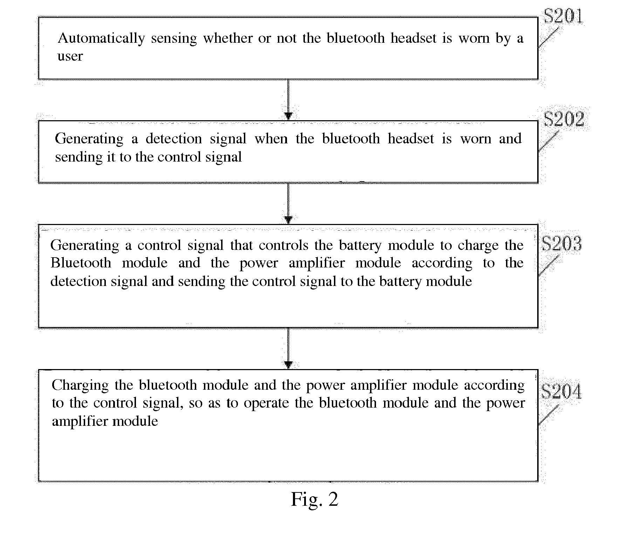

As shown in Fig. 2, a control method of the bluetooth headset having automatic induction and control functions of the embodiment includes the following step:
at step S201, the body induction module automatically senses whether or not the bluetooth headset is worn or not by a user;
at step S202, when the bluetooth headset is worn by the user, the body induction module generates a first detection signal and sends the first detection signal to a control module;
at step S203, the control module generates a first control signal that controls the battery module to provide a power source to the bluetooth module and the power amplifier module according to the first detection signal from the body induction module, and sends the first control signal to the power module; and
at step S204, the control module provides a power source to the bluetooth module and the power amplifier module respectively according to the first control signal from the body induction module, so as to operate the bluetooth module and the power amplifier module.

In this embodiment, when the bluetooth headset system is worn by the user, the body induction module generates the first detection signal and sends the first detection signal to the control module. The control module generates the control signal that controls the power module to provide a power source to the bluetooth module and the power amplifier module according to the first detection signal from the body induction module, and sends the control signal to the power module. problems, such as misjudgment and lower accuracy produced by the mechanical switch, can be avoided, and the aim of intelligentized power-saving is realized. Thus, the power is saved and the environment is protected.

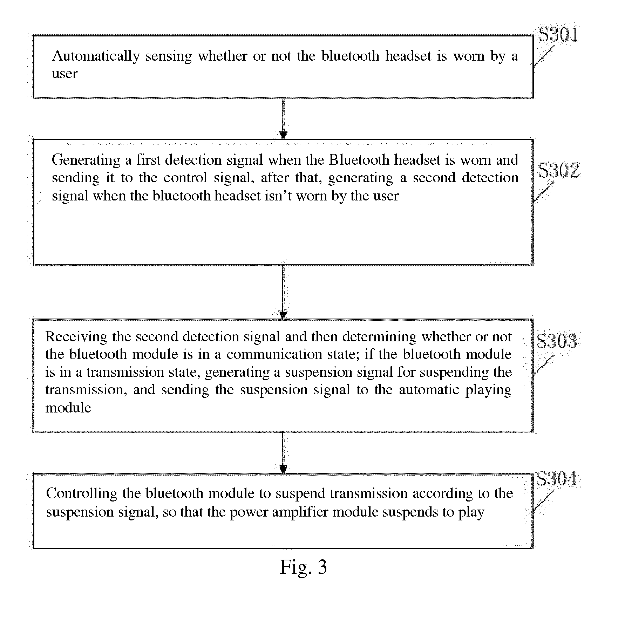

As shown in Fig. 3, a control method of the bluetooth headset having automatic induction and control functions according to another embodiment includes the following steps:
at step S301, the body induction module automatically senses whether or not the bluetooth headset is worn or not by a user;
at step S302, when the bluetooth headset is worn by the user, the body induction module generates a first detection signal and sends the first detection signal to a control module; after that, when the bluetooth headset isn't worn by the user, the body induction module generates a second detection signal and sends the second detection signal to the control module;;
at step S303, the control module, when receiving the second detection signal from the body induction module, determines whether or not the bluetooth module is in a transmission state. if the bluetooth module is in a transmission state, the control module then generates a suspension signal for suspending the transmission of the bluetooth module, and sends the suspension signal to the automatic playing module;
at step S304, the automatic playing module controls the bluetooth module to suspend wireless transmission according to the suspension signal from the control module, so that the power amplifier module suspends to play.

In this embodiment, when the bluetooth headset is worn by the user, the body induction module generates a first detection signal and sends the first detection signal to a control module; after that, when the bluetooth headset isn't worn by the user, the body induction module generates a second detection signal and sends the second detection signal to the control module; the control module, when receiving the second detection signal from the body induction module, determines whether or not the bluetooth module is in a transmission state. If the bluetooth module is in a transmission state, the control module then generates a suspension signal for suspending the transmission of the bluetooth module, and sends the suspension signal to the automatic playing module. The automatic playing module controls the bluetooth module to suspend wireless transmission according to the suspension signal from the control module, so that the power amplifier module suspends to play. In this way, problems, such as misjudgment and lower accuracy produced by the mechanical switch, can be avoided, and the aim of intelligentized power-saving is realized. Thus, the power is saved and the environment is protected.

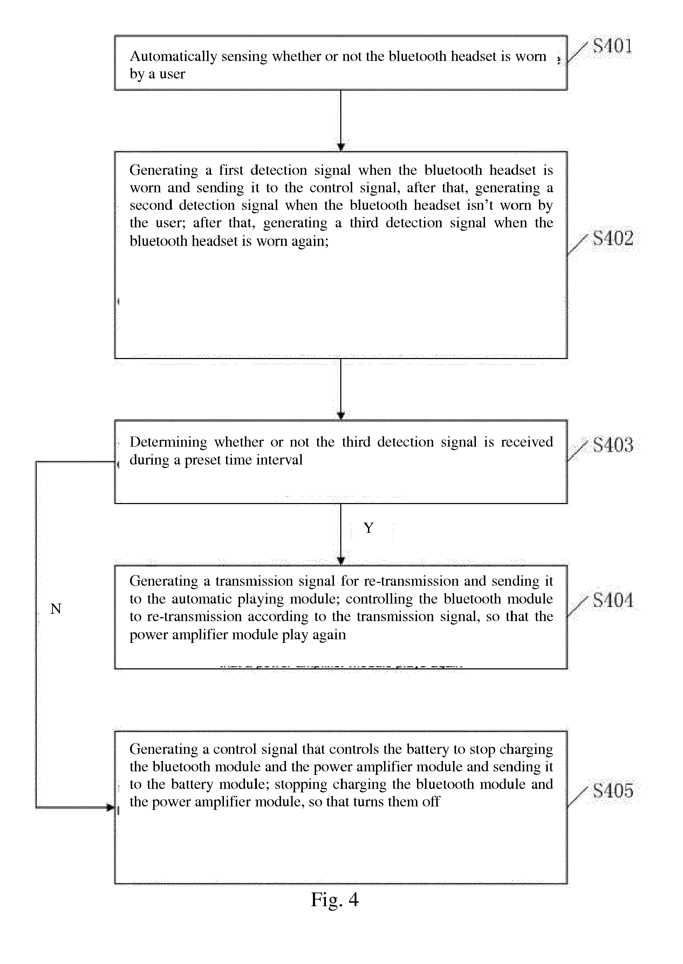

As shown in Fig. 4, a control method of the bluetooth headset having automatic induction and control functions according to another embodiment includes the following steps:
at step S401, the body induction module automatically senses whether or not the bluetooth headset is worn or not by a user;
at step S402, when the bluetooth headset is worn by the user, the body induction module generates a first detection signal and sends the first detection signal to a control module; after that, when the bluetooth headset isn't worn by the user, the body induction module generates a second detection signal and sends the second detection signal to the control module; after that, generates a third detection signal when the Bluetooth headset system is worn by the user again, and sends the third detection signal to the control module;
at step S403, the control module determines whether or not the third detection signal from the body induction module is received during a preset time interval;
at step S404, if the third detection signal from the body induction module is received during the preset time interval, then the control module generates a transmission signal for re-transmission of the bluetooth module, and sends the transmission signal to the automatic playing module. The automatic playing module controls the bluetooth module to wireless transmit again according to the transmission signal, so that the power amplifier module plays again; or stops providing a power source to the bluetooth module and the power amplifier module according to the second control signal from the control module, so as to turn them off; and
at step S405, if the third detection signal from the body induction module is received during the preset time interval, then the control module generates a second control signal that controls the power module to stop providing a power source to the bluetooth module and the power amplifier module, and sends the second control signal to the battery module. The battery module stops providing a power source to the bluetooth module and the power amplifier module according to the second control signal from the control module, so as to turn the bluetooth module and the power amplifier module off.

In this embodiment, when the bluetooth headset is worn by the user, the body induction module generates a first detection signal and sends the first detection signal to a control module; after that, when the bluetooth headset isn't worn by the user, the body induction module generates a second detection signal and sends the second detection signal to the control module; after that, generates a third detection signal when the bluetooth headset system is worn by the user again, and sends the third detection signal to the control module. In this way, problems, such as misjudgment and lower accuracy produced by the mechanical switch, can be avoided, and the aim of intelligentized power-saving is realized. Thus, the power is saved and the environment is protected.

The foregoing is merely preferred embodiments of the invention, but is not intended to limit the invention; and any modification, equivalent replacement, improvement and the like made within the spirits and principles of the invention shall all be within the protection scope of the invention.

## Claims

1. A bluetooth headset system having automatic induction and control functions, comprising: a bluetooth module, a power amplifier module, a body induction module, a control module, a battery module and an automatic playing module;
the bluetooth module configured for wireless transmission;
the power amplifier module connected to the bluetooth module, and configured for playing a sound signal received by the bluetooth module;
the body induction module connected to the control module, and configured for automatically sensing whether or not the bluetooth headset system is worn by a user, generating a first detection signal when the bluetooth headset system is worn by the user and sending the first detection signal to the control module; after that, generating a second detection signal when the bluetooth headset system isn't worn by the user and sending the second detection signal to the control module; after that, generating a third detection signal when the bluetooth headset system is worn by the user again and sending the third detection signal to the control module;
the control module connected to the bluetooth module and the power amplifier module, and configured for generating a first control signal that controls the battery module to provide a power source for the bluetooth module and the power amplifier module according to the first detection signal and sending the first control signal to the power module; after that, if the control module received the second detection signal, determining whether or not the bluetooth module is in a transmission state, if the bluetooth module being in a transmission state, generating a suspension signal for suspending the transmission of the bluetooth module and sending the suspension signal to the automatic playing module; after that, determining whether or not the third detection signal is received during a preset time interval , if the third detection signal is received during the preset time interval, then generating a transmission signal for re-transmission of the bluetooth module, and sending the transmission signal to the automatic playing module; and if the third detection signal isn't received during the preset time interval, then generating a second control signal that controls the battery module to stop providing a power source to the bluetooth module and the power amplifier module, and sending the second control signal to the battery module;
the automatic playing module connected to the bluetooth module, and configured for controlling the bluetooth module to suspend the wireless transmission according to the suspension signal, so that the power amplifier module suspends to play; or control the bluetooth module to wireless transmit again according to the transmission signal, so that the power amplifier module plays again; and
the battery module connected to the control module, and configured for providing a power source for the bluetooth module and the power amplifier module respectively according to the first control signal so as to operating the bluetooth module and the power amplifier module, or stopping providing a power source to the bluetooth module and the power amplifier module according to the second control signal so as to turn the bluetooth module and the power amplifier module off.

2. The system of claim 1, wherein the body induction module is a capacitive sensor.

3. The system of claim 1, wherein the body induction module is a photoelectrical sensor.

4. The system of claim 1, wherein the control module is a Digital Signal Processor, a Advanced RISC Machines or a Phase Locked Loop.

5. The system of claim 1, wherein the power amplifier module is an amplified filter circuit.

6. The system of claim 1, wherein the bluetooth headset system is an ear-hook bluetooth headset or in-ear mono bluetooth headset.

7. A control method of the bluetooth headset system having automatic induction and control functions according to any one of claims 1 to 6, comprising the steps of:
sensing, by the body induction module, whether or not the bluetooth headset system is worn by a user; generating a first detection signal when the bluetooth headset system is worn by the user and sending the first detection signal to the control module; after that, generating a second detection signal when the bluetooth headset system isn't worn by the user and sending the second detection signal to the control module; after that, generating a third detection signal when the bluetooth headset system is worn by the user again, and sending the third detection signal to the control module;
generating, by the control module, a first control signal that controls the battery module to provide a power source for the bluetooth module and the power amplifier module according to the first detection signal from the body induction module, and sending the first control signal to the battery module; after that, if receiving the second detection signal, determining whether or not the bluetooth module is in a transmission state, if the bluetooth module being in a transmission state, generating a suspension signal for suspending the transmission of the bluetooth module and sending the suspension signal to the automatic playing module; after that, determining whether or not the third detection signal is received during a preset time interval, if the third detection signal is received during the preset time interval, generating a transmission signal for re-transmission of the bluetooth module and sending the transmission signal to the automatic playing module; if the third detection signal isn't received during the preset time interval, generating a second control signal that controls the battery module to stop providing the power source to the bluetooth module and the power amplifier module, and sending the second control signal to the battery module;
controlling, by the automatic playing module, the bluetooth module to suspend wireless transmission according to the suspension signal from the control module, so that the power amplifier module suspends to play; or controlling the bluetooth module to wireless transmit again according to the transmission signal from the control module, so that the power amplifier module plays again; and
providing, by the battery module, a power source for the bluetooth module and the power amplifier module respectively according to the first control signal from the control module so as to operating the bluetooth module and the power amplifier module; or stopping providing a power source to the bluetooth module and the power amplifier module according to the second control signal from the control module so as to turn the bluetooth module and the power amplifier module off.

8. The method of claim 7, wherein the body induction module is a capacitive sensor, the capacitance of the capacitive transducer varied while the bluetooth headset systme is worn or removed, and thus the detection signals are generated according to the varied capacitance.

9. The method of claim 7, wherein the body induction module is a photoelectrical sensor, the ray propagation of the photoelectrical transducer changed while bluetooth headset system is worn or removed, and thus the detection signals are generated according to the change of ray propagation.
